Europäisches Patentamt

European Patent Office

Office européen des brevets

(11) Publication number: **0 369 175 B1**

# EUROPEAN PATENT SPECIFICATION

(45) Date of publication of patent specification: **09.11.94**  (51) Int. Cl.⁵: **A23L 1/16**

(21) Application number: **89119228.8**

(22) Date of filing: **17.10.89**

(54) Use of a functional protein in the preparation of refrigerated product.

(30) Priority: **14.11.88 US 271045**

(43) Date of publication of application:
**23.05.90 Bulletin 90/21**

(45) Publication of the grant of the patent:
**09.11.94 Bulletin 94/45**

(84) Designated Contracting States:
**AT BE CH DE ES FR GB GR IT LI LU NL SE**

(56) References cited:
**EP-A- 0 105 100**
**EP-A- 0 130 282**

**PATENT ABSTRACTS OF JAPAN vol. 5, no. 200 (C-084), 18December 1981; & JP - A - 56121451 (KAWAI SHOICHI) 24.09.1981**

**DATABASE WPIL/DERWENT abstract no. 83-54988K(23),Derwent Publications Ltd. London, GB; & JP -**

**A - 58071850 (SAWADA SHOTEN K.K.) 28.04.1983**

**PATENT ABSTRACTS OF JAPAN vol. 8, no. 225, (C-247)(1662), 16 October 1984; & JP - A - 59109145 (SHIMADAYA HONTEN K.K.)**

23.06.1984

**PATENT ABSTRACTS OF JAPAN vol. 8, no. 150, (C-233), 12July 1984; & JP - A - 57166794 (NICHIDEN KAGAKU K.K.) 30.03.1984**

**PATENT ABSTRACTS OF JAPAN vol. 7, no. 11 (C-145), 18January 1983; & JP - A - 5658333 (MIYAJI SATOU) 20.10.1982**

(73) Proprietor: **SOCIETE DES PRODUITS NESTLE S.A.**
**Case postale 353**
**CH-1800 Vevey (CH)**

(72) Inventor: **Hsu, Jau Yann**
**21, Flax Hill Road**
**Brookfield, Conn. 06804 (US)**
Inventor: **Lee, Eldon Chen-Hsiung**
**10 High Trail Road**
**New Milford, Conn. 06776 (US)**
Inventor: **Wedral, Elaine Regina**
**RR2, P.O. Box 480A**
**Sherman, Conn. 06784 (US)**

**Description**

The present invention relates to the use of a functional protein to retard starch retrogradation of refrigerated cooked products e.g. pastas from non-conventional starchy materials containing substantially no gluten.

EP-A-0130282 describes the production of a dry pasta, JP-A-58071850 relates to a rice cake, and JP-A-56121451 describes the formation of a pasta by reaction with calcium ions as coagulating agent followed by sterilising.

There has recently been an increasing market demand for high quality culinary chilled food products. However, retrogradation has been a common problem in starch-predominant products, particularly on refrigeration storage and cooked rice used in chilled foods shows this problem which involves firming texture (staling) progressively on refrigeration.

When used in the preparation of pastas, non-conventional starchy materials such as rice, maize and potatoes which contain substantially no gluten, generally require a binder to form a good shape during extrusion and to prevent pasta stickiness during cooking. Binders that have been reported to be suitable for such purposes include gelatinised starch (British Patent No. 1384149), gums such as alginates and certain proteins. However, we have found that the addition of gelatinised starch or alginates to such starchy products does not retard starch retrogradation on refrigerated storage. Chemically modified starches such as certain organic acid derivatives (United States Patent No. 3953616) and certain emulsifiers have also been reported to have a lower staling effect. However, consumers generally prefer natural substances.

Although pasta formulations containing added proteins have been described in which the proteins are added for protein enrichment or as binding agents, there have been no reports on the use of added proteins to retard starch retrogradation in refrigerated cooked products. We have surprisingly found that the addition of certain functional proteins to the starchy material retards starch retrogradation on refrigerated storage of the cooked product.

Accordingly, the present invention provides the use of a functional protein to retard starch retrogradation of a refrigerated cooked product comprising a starchy material containing substantially no gluten, which comprises incorporating an effective amount of gluten, egg albumen, gelatin, milk protein, soy protein or yeast protein into the uncooked starchy material, cooking the starchy material and cooling to a refrigeration temperature.

By a starchy material containing substantially no gluten we mean a starch or a flour containing substantially low levels of proteins and proteins of lower functionality. The starches contain substantially no gluten/proteins whereas the flours contain some gluten but in substantially low quantities and low functionality.

Examples of starchy materials containing substantially no gluten include flours and starches derived from rice, maize and potatoes, reconstituted rice and similar starchy materials. The rice may be regular, parboiled, precooked, brown, long-grain, medium-grain, Basmati (from India), roasted wild rice and waxy (glutaneous/sweet) rice (from Japan and Taiwan).

By "functional protein" we mean an active protein which possesses its functional properties including binding capability, water absorption and protein-carbohydrate interaction which reduces starch retrogradation. The functional protein is preferably gluten, but other functional proteins may be used such as animal proteins e.g. egg albumen, gelatin or milk protein, plant proteins e.g. soy protein, and microbial proteins e.g. yeast protein. The amount of active protein added to the starchy material may be from 1 to 20% preferably from 2 to 10% and especially from 2.5 to 7.5% by weight based on the weight of the starchy material.

If desired, other additives such as alginate gums may be added to the starchy material.

The starchy material containing the functional protein may be formed into a pasta, for example by extrusion followed by cooking or extrusion/cooking, before cooling. The pastas may be formed by extrusion or by the dough kneading/sheeting process.

By refrigeration temperature we mean above 0°C to about 10°C, usually from about 2° to about 8°C.

The following Examples further illustrate the present invention. Parts are given by weight.

Example 1

81 parts of ungelatinised rice flour and 13 parts of pregelatinised rice flour were mixed with 5 parts of wheat gluten, 0.5 parts of sodium alginate, 0.5 parts of propylene glycol alginate and 40 parts of water until uniform. The dough was then extruded through a low-pressure, pasta-type extruder to form a simulated rice grain shape. The rice pasta was cooked in boiling water for 3 minutes, drained, cooled and placed in a refrigerator at 5°C.

To measure the retrogradation after a period of storage in the refrigerator, a 15 g sample of the pasta was placed in a Kramer shear cell apparatus. The compressibility of the samples was performed with the following parameters:

| - full scale load, | 100 kg; |
| - crosshead speed, | 50 mm/min; |
| - chart drive, | 50 mm/min; |

The height of peaks was calculated to an equivalent weight load of 15 g sample. The percent of retrogradation after storage was expressed as the percent of the increasing weight load based on the initial sample before storage. The initial Instron Compressibility was 9 kg and after 18 days it was 13 kg which indicates a starch retrogradation of 44%.

Comparative Example A

Example 1 was repeated except that no gluten was added. The initial Instron Compressibility was 11 kg and after 18 days storage at 5°C was 19.4 kg which indicates a starch retrogradation of 76%.

In the following Examples the tests for retrogradation were carried out as follows:

To measure the retrogradation after a period of storage in the refrigerator at approximately 5°C, a 30g sample of the pasta was placed even in a Kramer shear cell apparatus. The Instron compressibility of the samples was performed with the following parameters: full scale load, 100 Kg; crosshead speed, 50mm/min; chart drive, 50mm/min. The percent of retrogradation after storage was expressed as the percent of the increasing weight-load based on the initial sample before storage.

The thermal characterization for retrograded starch was performed by using differential scanning calorimetry (DSC). The pasta sample after a period of storage was ground to paste form, weighed and encapsulated in a stainless steel pan. The sample pan was scanned from 25 to 150°C at a rate of 10°C/min.

Examples 2 to 6

80 parts of uncooked long grain rice flour, 15 parts of pre-gelatinized long grain rice flour and 41 parts of water were mixed with 5 parts of wheat gluten, egg white, whole egg, sodium caseinate, or Torula yeast, in separate trials, until uniform, and extruded through a low-pressure, pasta type extruder to form a desired pasta shape. The pasta was cooked in boiling water, then cooled and packed under a controlled atmosphere using a gas mixture of carbon dioxide and nitrogen to extend its shelf-life. The results of the retrogradation tests are given in Table 1.

Comparative Example B

A similar procedure to that described for Examples 2 to 6 was carried out except that no functional protein was added. The results of the retrogradation tests are given in Table 1.

## TABLE 1

### I. Instron Compressibility:
Kg/30 g pasta sample in a Kramer shear cell

| Example | Description | Days at 5°C Initial | 9 days | Retrogradation, % 9 days at 5°C |
|---------|-------------|---------|--------|----------------------|
| B | Control (none) | 14.2 | 31.0 | 118 |
| 2 | Wheat Gluten | 9.8 | 12.0 | 22 |
| 3 | Egg White | 15.4 | 25.0 | 62 |
| 4 | Whole Egg | 11.0 | 21.0 | 91 |
| 5 | Caseinate | 10.8 | 16.0 | 48 |
| 6 | Torula Yeast | 12.4 | 23.0 | 85 |

### II. DSC Analysis: 12 days at 5°C

| Example | Description | Peak Temperature 50-55°C $\Delta$H, J/g |
|---------|-------------|----------------------------|
| B | Control (none) | 3.65 |
| 2 | Wheat Gluten | 1.51 |
| 3 | Egg White | 1.90 |
| 4 | Whole Egg | 2.50 |
| 5 | Caseinate | 2.47 |
| 6 | Torula Yeast | ---- |

As shown in the TABLE 1, the addition of functional proteins, wheat gluten, egg white, whole egg, sodium caseinate, and Torula yeast showed less retrogradation than the comparative control with no added protein. Wheat gluten demonstrated the most effective protein for minimizing starch retrogradation with stable low Instron compressibility and low enthalpy ( H) of retrograded starch. The endotherm of retrograded starch showed the peak maximum at approximately 50-55°C.

Examples 7 to 11

55 parts of precooked potato flour from ground potato flake, 40 parts of potato starch and 45 parts of water were mixed with 5 parts of wheat gluten, egg white, whole egg, sodium caseinate or Torula yeast, in separate trials, until uniform, and extruded through a low-pressure, pasta type extruder to form a desired pasta shape. The pasta was cooked in boiling water or steam, then cooled and packed under a controlled atmosphere using a gas mixture of carbon dioxide and nitrogen to extend its shelf life. The results of the

4

retrogradation tests are given in TABLE 2.

Comparative Example C

A similar procedure to that described for Examples 7 to 11 was carried out except that no functional protein was added. The results of the retrogradation tests are given in TABLE 2.

## TABLE 2

### I. Instron Compressibility
#### Kg/30g pasta sample in a Kramer shear cell

| | | Days at 5°C | | | Retrograd., % |
|---|---|---|---|---|---|
| Example | Description | Initial | 7 days | 20 days | 7 days at 5°C |
| C | Control (none) | 7.8 | 22.5 | 22.5 | 188 |
| 7 | Wheat Gluten | 4.0 | 4.8 | 4.8 | 20 |
| 8 | Egg White | 7.6 | 13.4 | 14.2 | 76 |
| 9 | Whole Egg | 5.6 | 13.4 | 15.4 | 139 |
| 10 | Caseinate | 7.2 | 15.0 | 15.2 | 108 |
| 11 | Torula Yeast | 5.8 | 14.0 | 15.6 | 141 |

### II. DSC Analysis: 20 days at 5°C storage

| Example | Description | Peak Temperature 50-55°C $\Delta$ H. J/g |
|---|---|---|
| C | Control (none) | 4.55 |
| 7 | Wheat Gluten | 2.54 |
| 8 | Egg White | 2.07 |
| 9 | Whole Egg | 3.41 |
| 10 | Caseinate | 3.43 |
| 11 | Torula Yeast | 3.48 |

As shown in the TABLE 2, the addition of wheat gluten, egg protein, whole egg, sodium caseinate and Torula yeast showed less retrogradation than the comparative control with no added protein. Wheat gluten demonstrated the most effective functional protein for minimizing starch retrogradation with stable low Instron compressibility and low enthalpy ( H) of retrograded starch.

Examples 12 to 17

60 parts of corn flour, 20 parts of maize starch, 15 parts of pre-cooked corn flour and 41 parts of water were mixed with 5 parts of wheat gluten, egg white, whole egg, sodium caseinate, Torula yeast or gelatin, in separate trials, until uniform, and extruded through a low-pressure, pasta-type extruder to form a desired pasta shape. The pasta was cooked in boiling water, then cooled and packed under a controlled atmosphere using a gas mixture of carbon dioxide and nitrogen to extend its shelf life. The results of the retrogradation tests are given in Table 3.

Comparative Example D

A similar procedure to that described for Examples 12 to 17 was carried out except that no functional protein was added. The results of the retrogradation tests are given in Table 3.

## TABLE 3

### I. Instron Compressibility
Kg/15g pasta sample in a Kramer shear cell

| | | | Days at 5°C | | | Retrograd., % |
|---|---|---|---|---|---|---|
| Example | Description | Initial | 1 day | 5 days | 18 days | 18 days at 5°C |
| D | Control (none) | 4.2 | 7.7 | 10.8 | 14.0 | 233 |
| 12 | Wheat Gluten | 2.8 | 4.4 | 4.5 | 4.6 | 64 |
| 13 | Egg White | 2.8 | 5.8 | 5.8 | 6.8 | 143 |
| 14 | Whole Egg | 2.7 | 5.6 | 5.8 | 8.0 | 196 |
| 15 | Caseinate | 3.4 | 7.0 | 7.5 | 8.2 | 141 |
| 16 | Torula Yeast | 2.7 | 6.2 | 7.6 | 8.2 | 204 |
| 17 | Gelatin | 2.4 | 5.9 | 7.0 | 7.2 | 200 |

### II. DSC Analysis: 18 days at 5°C storage

| | | Peak Temperature 50-55°C |
|---|---|---|
| Example | Description | $\Delta$H.J/g |
| D | Control (none) | 3.76 |
| 12 | Wheat Gluten | 2.42 |
| 13 | Egg White | 2.67 |
| 14 | Whole Egg | 2.85 |
| 15 | Caseinate | 2.68 |
| 16 | Torula Yeast | 2.68 |
| 17 | Gelatin | 2.70 |

As shown in the TABLE 3, the addition of wheat gluten, egg protein, whole egg, sodium caseinate, Torula yeast and gelatin showed less retrogradation than the comparative control with no added protein. Wheat gluten demonstrated the most effective functional protein for minimizing starch retrogradation with stable low Instron compressibility and low enthalpy ($\Delta$H) of retrograded starch.

## Claims

1. The use of a functional protein to retard starch retrogradation of a refrigerated cooked product comprising a starchy material containing substantially no gluten, which comprises incorporating an effective amount of gluten, egg albumen, gelatin, milk protein, soy protein or yeast protein into the uncooked starchy material, cooking the starchy material, and cooling to a refrigeration temperature.

2. The use according to claim 1 wherein the starchy material is a flour or starch derived from rice, maize or potatoes.

3. The use according to claim 1 wherein the amount of active functional protein added to the starchy material is from 1% to 20% by weight based on the weight of the starchy material.

4. The use according to claim 1 wherein the starchy material containing the functional protein is formed into a pasta before cooling.

**Patentansprüche**

1. Verwendung eines funktionellen Proteins zum Verzögern der Retrogradation von Stärke in einem gekühlten, gekochten Produkt, welches ein Stärkematerial enthält, das im wesentlichen kein Gluten enthält, welche Verwendung das Beimengen einer wirksamen Menge von Gluten, Ovalbumin, Gelatine, Milchprotein, Sojaprotein oder Hefeprotein zu dem ungekochten Stärkematerial, das Kochen des Stärkematerials und das Abkühlen desselben auf eine Kühltemperatur umfaßt.

2. Verwendung nach Anspruch 1, wobei das Stärkematerial ein Mehl oder eine Stärke ist, welches bzw. welche aus Reis, Mais oder Kartoffeln stammt.

3. Verwendung nach Anspruch 1, wobei die Menge des wirksamen funktionellen Proteins, welche zu dem Stärkematerial zugesetzt wird, 1-Gew.-% bis 20 Gew.-%, bezogen auf das Gewicht des Stärkematerials, beträgt.

4. Verwendung nach Anspruch 1, wobei das das funktionelle Protein enthaltende Stärkematerial vor dem Abkühlen zu Teigwaren verformt wird.

**Revendications**

1. Utilisation d'une protéine fonctionnelle pour retarder la rétrogradation de l'amidon d'un produit cuit réfrigéré, comprenant une matière amylacée ne contenant pratiquement pas de gluten, qui comprend l'incorporation d'une quantité efficace de gluten, d'albumine d'oeuf, de gélatine, de protéine de lait, de protéine de soja ou de protéine de levure à la matière amylacée non cuite, la cuisson de la matière amylacée et le refroidissement à une température de réfrigération.

2. Utilisation suivant la revendication 1, dans laquelle la matière amylacée est une farine ou un amidon dérivé du riz, du maïs ou de la pomme de terre.

3. Utilisation suivant la revendication 1, dans laquelle la quantité de protéine fonctionnelle active ajoutée à la matière amylacée va de 1 % à 20 % en poids sur la base du poids de la matière amylacée.

4. Utilisation suivant la revendication 1, dans laquelle la matière amylacée contenant la protéine fonctionnelle est mise sous forme de pâtes alimentaires avant refroidissement.